# EUROPEAN PATENT SPECIFICATION

(11) **EP 0 309 622 B1**
(45) Date of publication and mention of the grant of the patent: **05.03.1997**
(21) Application number: 87308575.7
(22) Date of filing: 28.09.1987
(51) Int. Cl.: C07F 9/54, C09K 3/16, C08K 5/50

(54) **Method for reducing build up of electrostatic charges on transparent synthetic macromolecular materials selected from polymethyl methycrylate or polycarbonate**
Verfahren zur Verminderung elektrostatischer Ladungen auf transparenten synthetischen makromolekularen Materialien ausgewählt aus Polymethyl Methacrylat oder Polycarbonat
Procédé pour diminuer la charge électrostatique de matériaux synthétiques macromoléculaires choisis parmi le polyméthylméthacrylate ou le polycarbonate

(43) Date of publication of application: 05.04.1989
(73) Proprietor: Takemoto Yushi Kabushiki Kaisha, Gamagouri-shi Aichi-ken (JP)
(72) Inventor: Sugiura, Masato, Gamagouri-shi Aichi-ken (JP); Shimizu, Hideo, Gamagouri-shi Aichi-ken (JP); Imamura, Shigeru, Toyokawa-shi§Aichi-ken (JP); Sugiura, Fumitoshi, Gamagouri-shi Aichi-ken (JP)
(74) Representative: Clifford, Frederick Alan

(56) References cited:
- DE-A- 2 044 931
- US-A- 3 755 459
- US-A- 4 005 057
- US-A- 4 006 123

## Description

This invention relates to a method for reducing the build up of electrostatic charges on transparent synthetic macromolecular materials selected from polymethyl methacrylate or polycarbonate.

Synthetic macromolecular materials are generally hydrophobic. As a result, they tend to become electrostatically charged and this property is a serious obstacle not only in the production of such materials but also in using the products.

In the past, electrically conductive agents, such as carbon and metal particles, or surfactants were used in attempts to reduce electrostatic charges on synthetic macromolecular materials, either by mixing the components together or by coating the polymer with a suitable agent. These methods are however not generally feasible for many reasons such as the large amount of such agent which must be used, difficulty of adding such agent to materials, the difficulty of obtaining a transparent product and high cost of such conductive agents. Thus, such electrically conductive agents can be used only in limited situations.

There are however many antistats having surfactants as their main constituent,and appropriate antistats may be selected according to the situation.

Many of the type to be internally compounded have been considered and tried. When used in this way, however, anionic surfactants are difficult to handle because they are of inferior compatibility and do not disperse uniformly, or else tend to decompose or deteriorate when heated. Cationic surfactants containing quaternary nitrogen in their molecules, and amphoteric surfactants, can be used only in a narrow range of situations because, although their antistatic characteristics are good, they are extremely poor in heat resistance. Non-ionic surfactants are relatively superior to ionic surfactants as regarding compatibility with synthetic macromolecular materials, but tend to be of weak antistatic characteristics,with effects which disappear with time at high or even normal temperatures.

Although metal salts of organic sulfonic acids have been reported as internally applied (i.e. compounded) antistats for polycarbonate and polyester resins which are moulded at high temperatures (West German Patent 3, 004, 017), they are not sufficiently compatible with resins and possess inadequate heat resistance.

There has also been a report on using phosphonium salts of organic sulfonic acids having a halogen substituent as a flame retardant (U.S. Patent 4,093,589); and a further report on using phosphonium salts with a conductive polymer as an antistatic composition (U.S. Patent 4005057). However the former is not expected to function as an antistat and the latter is not expected to provide a transparent antistatic thermoplastic resin composition.

The present invention sets out to provide a new method of reducing electrostatic charges, by which the aforementioned problems of conventional method can be reduced or eliminated.

The present inventors have discovered that applying phosphonium sulfonates of a special type is a desirable way of reducing electrostatic charges upon transparent synthetic macromolecular materials selected from polymethyl methacrylate or polycarbonate, without causing turbidity and discolouration.

In accordance with the present invention there is provided a method for reducing the build-up of electrostatic charge without causing turbidity or discolouration upon transparent synthetic macromolecular materials selected from polymethyl methacrylate or polycarbonate in which an antistat comprising phosphonium sulfonate per se or phosphonium sulphonate compounded into master chips of the material is incorporated therein during production or fabrication thereof, the phosphonium sulfonate being shown by the general formula (I) below: 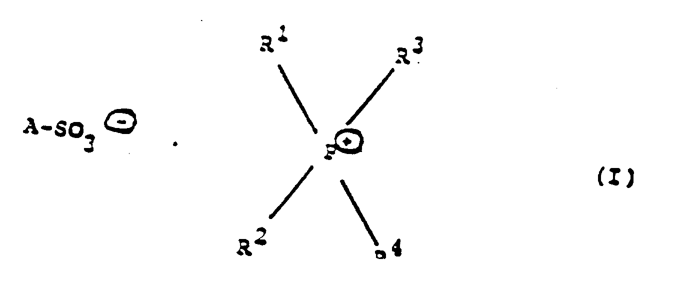 wherein A is an alkyl group having 8 carbon atoms, R¹ - R³ are each C₄ H₉ and R⁴ is a benzyl group; A is an alkyl group having 14 carbon atoms and R¹ - R⁴ are each C₄ H₉; A is a phenyl group substituted by an alkyl group with 9 carbon atoms and R¹ - R⁴ are all C₄ H₉ or R¹ - R³ are phenyl groups and R⁴ is methyl; A is a phenyl group substituted by an alkyl group with 12 carbon atoms and R¹ - R⁴ are all C₄H₉; or A is a phenyl group substituted by an alkyl group having 13 carbon atom and R¹ - R⁴ are all C₂H₅.

Phosphonium sulfonate as shown by (I) is composed of an organic sulfonate anion and an organic phosphonium cation.

The phosphonium sulfonate of the present invention can be produced by mixing the metal salt of the corresponding organic sulfonate and quaternary phosphonium salt in a solvent and washing out the byproduct inorganic salt with water, or extracting the product with an organic solvent such as methanol, isopropanol or acetone. Tetrabutyl phosphonium dodecylbenzene sulfonate, for example, can be produced with a yield of about 90% by placing 34.8g of sodim dodecylbenzene sulfonate, 33.9g of tetrabutyl phosphonium bromide and 200ml of water in a flask, stirring the mixture for one hour at 80°C, isolating phosphonium sulfonate which separates as an oily layer, washing it with 50ml of warm water and dehydrating by means of an evaporator.

Antistats having phosphonium sulfonate shown by formula (I) as principal components can be used with transparent synthetic macromolecular materials selected from polymethyl methacrylate or polycarbonate in two different ways to make use of their antistatic characteristics and the heat resistance of such antistatic characteristics. One of the methods is to add the antistat internally to, i.e. compound it with, such a synthetic macromolecular material. A common way to practice this method is to add the agent directly and to mix it in at the time of polymer production or fabrication. Another method involves preliminary preparation of master chips containing the agent at a high concentration. Such common methods can be used equally well with the present invention. Thus, in the case of polymethyl methacrylate and polycarbonate, an antistat agent can be added and mixed together either directly or as master chips at the time of fabrication. It can also be added at the time of cast-moulding of polymethyl methacrylate. In order to obtain a favourable result of such an internal application method, it is preferable to add the agent of the present invention at the rate of 0.1-10wt% with respect to the thermoplastic resin material and it is even more preferable to do so at the rate of 0.3-5wt%. Antistats of the present invention are more strongly resistant to heat than the conventional ionic surfactants, such as anionic, cationic and amphoteric surfactants, or than non-ionic surfactants. Since phosphonium with a hydrocarbon group having no other substituent is superior in heat resistance, it is particularly useful with synthetic macromolecular materials such as polycarbonate requiring high fabrication temperatures.

An antistat compound of formula (I) has the advantage of not having the problems of turbidity and colouring which might be present in aformentioned transparent synthetic macromolecular materials.

In what follows, examples of the present invention are given explaining more clearly the present invention.

The scope of the present invention as claimed is not intended to be limited by these examples.

### TEST GROUP 1-1 (Test Examples)

A Brabender mill (produced by Toyo Seiki, Inc) was used to mix specified amounts of the antistats of the present invention described in Table 1A with polymethyl methacrylate and polycarbonate. These resin compositions were used to mold sheets of 2mm in thickness by using a hot press (produced by Toyo Seiki, Inc).After each blank sheet was visually inspected and compared with a blank, it was left for one night at constant temperature and humidity of 10°C x65%RH and its surface resistance was measured thereafter in the same environmental conditions by using a super megohm meter (Model SM-5E produced by Toa Denpa Kogyo, Inc).

The results are shown in Table 1A wherein *1 indicates log Ω, *2 indicates a mixture with average chain length of C₂₂ H₄₅, Ø indicates a benzene ring, PMMA indicates polymethyl methacrylate, PC indicates polycarbonate, good indicates no colouring and no turbidity, and wherein mixing was effected under the condition of 130°C x 5 minutes for PMMA, 260°C x 5 minutes for PC and A, R¹ - R⁴ are as explained in connection with the formula (I).

**TABLE 1A**

| (Test Examples) | | | | | | | | | |
|---|---|---|---|---|---|---|---|---|---|
| RESINS | ANTISTATS | | | | | | | RESULTS | |
| | TYPE | A | R¹ | R² | R³ | R⁴ | WT% | SURFACE RESISTANCE *1 | APPEARANCE |
| PMMA | 2a | C₉H₁₉Ø | C₄H₉ | C₄H₉ | C₄H₉ | C₄H₉ | 4 | 9.3 | Good |
| | 2a | C₉H₁₉Ø | C₄H₉ | C₄H₉ | C₄H₉ | C₄H₉ | 2 | 10.3 | Good |
| | 2a | C₉H₁₉Ø | C₄H₉ | C₄H₉ | C₄H₉ | C₄H₉ | 1 | 10.9 | Good |
| | 2b | C₉H₁₉Ø | Ø | Ø | Ø | CH₃ | 2 | 10.5 | Good |
| | 2c | C₁₄H₂₉ | C₄H₉ | C₄H₉ | C₄H₉ | C₄H₉ | 2 | 9.8 | Good |
| | 2d | *2 | C₈H₁₇ | C₈H₁₇ | C₈H₁₇ | CH₃ | 2 | 10.6 | Good |
| | 2i | C₁₂H₂₅Ø | C₄H₉ | C₄H₉ | C₄H₉ | C₄H₉ | 2 | 10.4 | Good |
| | 2j | C₁₃H₂₇Ø | C₂H₅ | C₂H₅ | C₂H₅ | C₂H₅ | 2 | 10.0 | Good |
| PC | 2a | C₉H₁₉Ø | C₄H₉ | C₄H₉ | C₄H₉ | C₄H₉ | 2 | 11.1 | Good |
| | 2b | C₉H₁₉Ø | Ø | Ø | Ø | CH₃ | 2 | 11.5 | Good |
| | 2e | C₈H₁₇ | C₄H₉ | C₄H₉ | C₄H₉ | Ø-CH₂ | 2 | 10.4 | Good |
| | 2i | C₁₂H₂₅Ø | C₄H₉ | C₄H₉ | C₄H₉ | C₄H₉ | 2 | 10.9 | Good |

### TEST GROUP 1-2 (Comparison Examples)

Conventional antistats in Table 2 were used for similar tests as described above. The results of comparisons and measurements are shown in Table 2.

**TABLE 2**

| (Comparison Examples) | | | | | |
|---|---|---|---|---|---|
| RESINS | ANTISTATS | | | RESULTS | |
| | TYPE | | WT% | SURFACE RESISTANCE *1 | APPEARANCE |
| PMMA | a' | Dodecylbenzene sulfonate Na | 4 | 11.3 | White,turbid |
| | a' | Dodecylbenzene sulfonate Na | 2 | 12.8 | White,turbid |
| | b' | Alkyl (C = 14-15) sulfonate Na | 2 | 11.1 | White,turbid |
| | c' | Glycerine monostearate | 2 | 13< | Good |
| | d' | Lauryltrimethyl ammonium chloride | 2 | 12.0 | Turbid, Yellowing |
| | e' | Lauryltrimethyl ammonium tosilate | 2 | 11.8 | Yellowing |
| | h' | Tetrabutyl phosphonium paraamino benzene sulfonate | 2 | 11.5 | Yellowing |
| PC | a' | Dodecylbenzene sulfonate Na | 2 | 12.8 | Turbid Yellowing |
| | c' | Glycerine monostearate | 2 | 13< | Slight Yellowing |
| | e' | Lauryltrimethyl ammonium tosilate | 2 | 12.7 | Yellowing |
| | i' | Tetraphenyl phosphonium trichlorobenzene sulfonate | 2 | 13< | Good |

The tables presented above show clearly that the present invention not only has resistance against heat and humidity but also has improved antistatic characteristics and good appearance.

## Claims

1. A method for reducing the build-up of electrostatic charge without causing turbidity or discolouration upon transparent synthetic macromolecular materials selected from polymethyl methacrylate or polycarbonate in which an antistat comprising phosphonium sulfonate per se or phosphonium sulfonate compounded into master chips of the materials is incorporated therein during production or fabrication thereof, the phosphonium sulfonate being shown by the general formula (I) below: 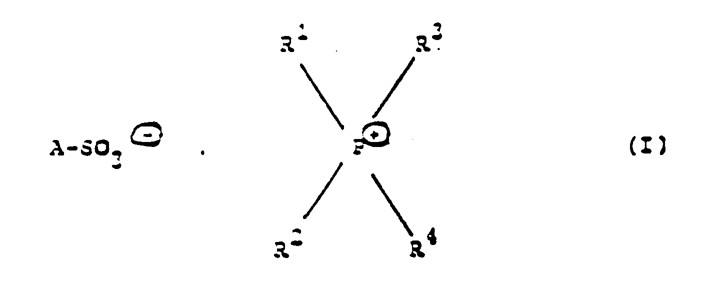 wherein A is an alkyl group having 8 carbon atoms, R¹ - R³ are each C₄ H₉ and R⁴ is a benzyl group; A is an alkyl group having 14 carbon atoms and R¹ - R⁴ are each C₄ H₉; A is a phenyl group substituted by an alkyl group with 9 carbon atoms and R¹ - R⁴ are all C₄ H₉ or R¹ - R³ are phenyl groups and R⁴ is methyl; A is a phenyl group substituted by an alkyl group with 12 carbon atoms and R¹ - R⁴ are all C₄H₉; or A is a phenyl group substituted by an alkyl group having 13 carbon atom and R¹ - R⁴ are all C₂H₅.

2. A method as claimed in claim 1 in which from 0.1-10wt% of the antistat with respect to the synthetic macromolecular material is incorporated.

3. A method as claimed in claim 2 in which 0.3 to 5wt% of the antistat with respect to the synthetic macromolecular material is incorporated.

## Patentansprüche

1. Verfahren zum Vermindern des Aufbaus elektrostatischer Aufladung, ohne eine Trübung oder Verfärbung auf transparenten, synthetischen makromolekularen Materialien hervorzurufen, ausgewählt aus Polymethylmethacrylat oder Polycarbonat, in welchem Verfahren ein Antistatikum, umfassend ein Phosphoniumsulfonat als solches oder ein Phosphoniumsulfonat durch Compoundieren während deren Herstellung oder Erzeugung in das Ausgangsgranulat des Materials inkorporiert werden, wobei das Phosphoniumsulfonat durch die allgemeine Formel (I) dargestellt wird: 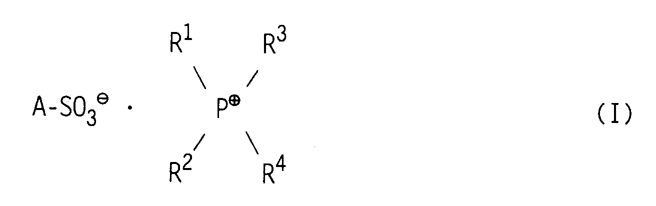 worin sind: A eine Alkyl-Gruppe mit 8 Kohlenstoffatomen, R¹ - R³ jeweils C₄H₉ und R⁴ eine Benzyl-Gruppe; oder A eine Alkyl-Gruppe mit 14 Kohlenstoff-atomen, R¹ - R⁴ jeweils C₄H₉; oder A eine Phenyl-Gruppe, die durch eine Alkyl-Gruppe mit 9 Kohlenstoffatomen substituiert ist, und R¹ - R⁴ alle C₄H₉ oder R¹ - R³ Phenyl-Gruppen und R⁴ Methyl; oder A eine Phenyl-Gruppe, die durch eine Alkyl-Gruppe mit 12 Kohlenstoffatomen substituiert ist, und R¹ - R⁴ alle C₄H₉; oder A eine Phenyl-Gruppe, die durch eine Alkyl-Gruppe mit 13 Kohlenstoffatomen substituiert ist, und R¹ - R⁴ alle C₂H₅.

2. Verfahren nach Anspruch 1, bei welchem 0,1 bis 10 Gewichtsprozent des Antistatikums bezogen auf das synthetische makromolekulare Material inkorporiert werden.

3. Verfahren nach Anspruch 2, bei welchem 0,3 bis 5 Gewichtsprozent des Anstistatikums bezogen auf das synthetische makromolekulare Material inkorporiert werden.

## Revendications

1. Procédé pour réduire l'accumulation de charge électrostatique sans provoquer de turbidité ni de décoloration sur des matières macromoléculaires synthétiques transparentes choisies parmi un polyméthacrylate de méthyle et un polycarbonate, dans lesquelles un agent antistatique composé de sulfonate de phosphonium seul ou de sulfonate de phosphonium combiné dans des fragments maîtres des matières est incorporé pendant la production ou fabrication de celles-ci, le sulfonate de phosphonium étant représenté par la formule générale (I) ci-dessous: 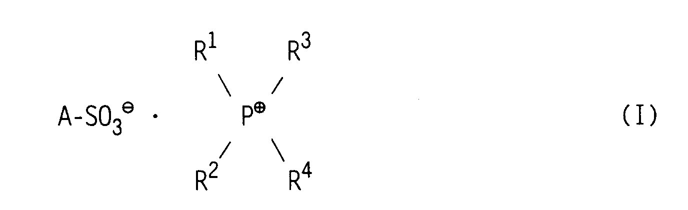 dans laquelle A est un groupe alkyle ayant 8 atomes de carbone, R¹ à R³ sont chacun C₄H₉ et R⁴ est un groupe benzyle; A est un groupe alkyle ayant 14 atomes de carbone et R¹ à R⁴ sont chacun C₄H₉; A est un groupe phényle substitué par un groupe alkyle ayant 9 atomes de carbone et R¹ à R⁴ sont tous C₄H₉ ou bien R¹ à R³ sont des groupes phényles et R⁴ est un groupe méthyle; A est un groupe phényle substitué par un groupe alkyle ayant 12 atomes de carbone et R¹ à R⁴ sont tous C₄H₉; ou A est un groupe phényle substitué par un groupe alkyle ayant 13 atomes de carbone et R¹ à R⁴ sont tous C₂H₅.

2. Procédé selon la revendication 1, dans lequel de 0,1 à 10% en poids de l'agent antistatique sont incorporés par rapport à la matière macromoléculaire synthétique.

3. Procédé selon la revendication 2, dans lequel 0,3 à 5% en poids de l'agent antistatique sont incorporés par rapport à la matière macromoléculaire synthétique.
